Europäisches Patentamt

European Patent Office

Office européen des brevets

(11) Publication number: **0 388 828**
**A1**

## (12) EUROPEAN PATENT APPLICATION

(21) Application number: **90105099.7**

(22) Date of filing: **19.03.90**

(51) Int. Cl.⁵: **B65D 77/22, B65D 47/24,**
**F16K 15/14**

(30) Priority: **23.03.89 IT 339389**

(43) Date of publication of application:
**26.09.90 Bulletin 90/39**

(84) Designated Contracting States:
**AT BE CH DE ES FR GB GR IT LI NL SE**

(71) Applicant: **ICA S.P.A.**
**Via del Litografo, 7**
**I-40138 Bologna(IT)**

Applicant: **TAPLAST S.N.C. di Evans**
**SANTAGIULIANA & C.**
**15, Via Odorico da Pordenone**
**I-36100 Vicenza(IT)**

(72) Inventor: **Santagiuliana, Evans**
**Via Odorico da Pordenone, 13**
**I-36100 Vicenza(IT)**
Inventor: **Rapparini, Gino**
**Viale Roma, 17**
**I-40138 Bologna(IT)**

(74) Representative: **Bonini, Ercole**
**c/o STUDIO ING. E. Bonini SAS 8 Corso**
**Fogazzaro**
**I-36100 Vicenza(IT)**

(54) **Single-acting valve for fluids.**

(57) The invention discloses a unidirectional valve for fluids, particularly suited to be installed on containers.

The valve includes a valve-body (2,42) substantially in the shape of a cylidrical cap, preferably made of plastic material and provided with holes (15, 45) on the bottom (16) and with a flexible plastic disk with a central hole (10).

The disk (6) is locked in the interior of the valve-body (2) through a groove (8) obtained around the internal perimeter of the cap itself, while the edge of the hole (10) contrasts against the surface of the central core of the valve-body.

When the pressure outside the container (4,43) is higher than the internal pressure, the edge of the central hole (10) of the disk (6) or a crown around this hole, adheres to a corresponding edge, or surface belonging to the central core of the valve-body, thus creating the seal, while if the internal pressure is higher than the external pressure, the middle of the disk (6) rises and forms an annular opening for the passage of the fluid towards the outside.

FIG.1

## SINGLE-ACTING VALVE FOR FLUIDS.

The invention concerns a unidirectional valve particularly suited to favour the outlet of fluids from the interior of ermetic containers.

It is known that unidirectional valves are fluid-intercepting organs which present the peculiarity of permitting the flow in a single direction. These valves find various applications in waterworks and gas plants, as well as organs for the discharge of overpressure from the interior of tanks and containers in general. When the internal pressure exceeds the sum of the external pressure and of the elastic valve reaction, the fluid of the container flows to the exterior and into the atmosphere until the equilibrium of the pressures is reset.

An application of this kind of valves can be found in the foodstuff industry, for instance in the packaging of coffee. We know, in fact, that coffee is packaged in silver paper containers which are vacuum sealed to lengthen the conservation of the coffee they contain. In the course of time, as long as the coffee remains in the sealed bag, it develops some gases which could break the sealed container, if they are not expelled. To avoid such an inconvenience, a unidirectional valve is applied to the container. This valve allows the outlet of the gases from the bag, but doesn't allow the air to enter the bag, because this could cause the deterioration of the coffee contained therein.

A unidirectional valve belonging to the known technique is applied to a coffee container and it permits the release of the overpressure contained in the interior into the atmosphere.

Such a unidirectional valve comprises a valve-body, applied to the container, a deformable valvular element is assembled. Said deformable valvular element intercepts a plurality of slits made on the valve-body which put the interior of the container in communication with the external environment.

The most obvious inconvenience of this kind of valve is that the seal is applied near the external part of the valvular element along an annular part providing contact between the valvular element and the valve-body and sometimes the obtained seal is not so effective, because of the remarkable extension of the contact area between the elastic disk and the valve-body.

Considering that after a period the elastic valvular element loses most of its elasticity because of the aging process of the plastic material which it is made of, it can be understood how this valve only provides a decisively precarious seal which becomes worse as time goes by.

The purpose of the present invention, is to eliminate the above mentioned inconvenience through a unidirectional valve for fluids, particularly suited to be installed on containers in general, so as to permit the outlet of the fluids contained therein, whenever the pressure within the container largely exceeds the pressure of the external environment.

The above mentioned purpose, and others that will be better explained hereafter, are obtained through the realization of a unidirectional valve for fluids, especially suited to be applied to containers, which, according to the claims, comprises a body which has substantially the shape of a cylindrical cap, made preferably of plastic material or rubber, applied to any container and provided with a bottom presenting some holes which put the interior of the container into communication with the external environment, and comprising also a thin elastic and flexible disk, made preferably of plastic material or rubber, provided with a central hole and cooperating with the valve-body, characterized in that the disk is fixed through a tongue-end-groove type joint inside the valve-body, said joint being obtained through the insertion of the perimetral edge of the disk into an annular groove which is present on the internal lateral wall of the valve-body, and in that this disk creates the seal with the body of the valve through the elastic contrast of the edge of the hole of this disk, or of an annular area around this edge, against a corresponding edge or a corrisponding surface belonging to the central area of the valve-body.

When the pressure outside the container is higher than the internal pressure, the valvular element rises and creates an annular section allowing the passage of the fluid from the interior to the exterior, said section being near the edge of the central hole of the disk.

Advantageously the invention discloses a unidirectional valve insuring a highly reliable performance, because the small extension of the area corresponding to the seal area, insure an optimal perfomance of the valve.

The described purposes and advantages will be better understood from the description of 6 different embodiments of the invention, which are given by way of example only, but are not meant to limit the scope of the invention and which are represented in the tables of drawing, wherein:

- Fig. 1 represents a lengthwise cross-section of an embodiment of the valve according to the invention in its closed position;

- Fig. 2 represents the same valve of Fig. 1 in its open position.

- Fig. 3 represents a cross-section of a varied embodiment of the valve according to the invention;

- Fig. 4 represents the valve of Fig. 3 in its open position.

- Fig. 5 represents a cross-section of another embodiment of the valve of Fig. 1.

- Fig. 6 represents the valve of Fig. 5 in its open position.

- Fig. 7 represents another embodiment of the valve of Fig. 1.

- Fig. 8 represents the valve of Fig. 7 in its open position.

- Fig. 9 is a further constructive variation of the valve of Fig. 1.

- Fig. 10 represents the valve of Fig. 9 in its open position.

- Fig. 11 represents the valve according to the invention in the embodiment which can be screwed onto the neck of a container.

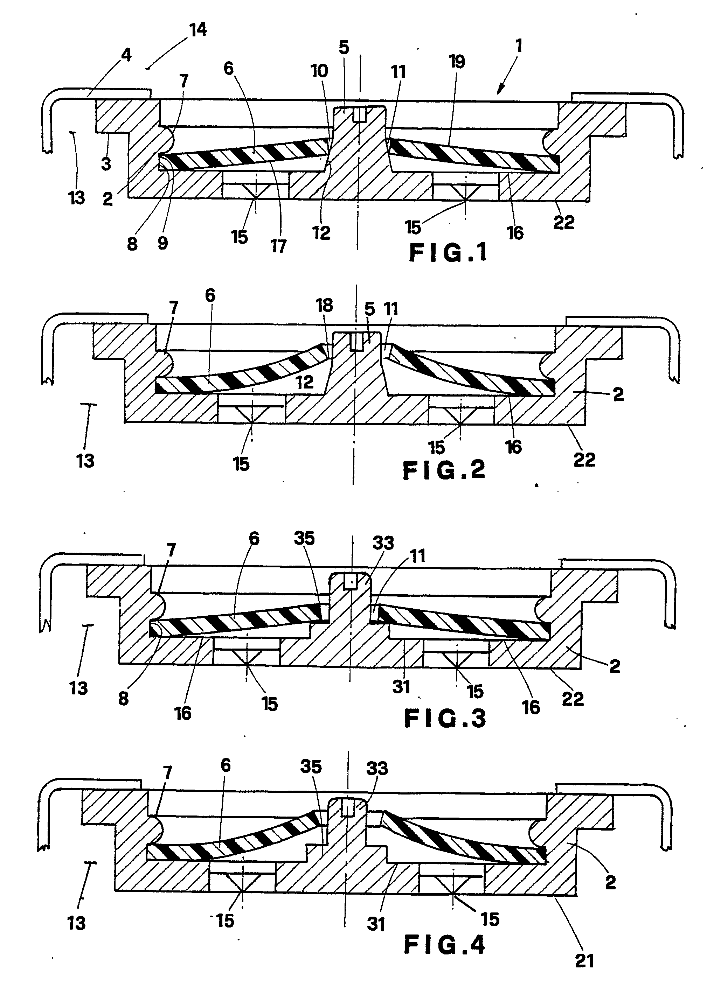

With reference to the above mentioned Figures it can be observed in Fig. 1 that the valve according to the invention, indicated with 1, has a valve-body 2 in the shape of a cap and is equipped with a flange 3 by which it is attached to the container 4 [partly represented in the cross-section], the junction being performed, for instance, by ultrasound fusion.

The valve-body 2, moreover, presents in the case of Fig. 1, a central core 5, which is essentially cylindrical, but with a conical base against which the edge of the hole 10 of the elastic disk 6 contrasts.

An annular projection 7 with a semicircular cross section obtained on the internal wall of the cap constituting the valve-body 2, creates an annular undercut groove 8 inside which the perimetral external edge 9, of the elastic disk 6 is lodged.

The assembly of the elastic disk 6 on the valve-body 2 is, therefore, performed by slipping into the central hole 10 of the disk 6 the central core 5 belonging to the valve-body 2 and fitting its external perimetral edge 9 into the annular undercut groove 8.

Thus the elastic disk 6 is firmly attached to the valve-body 2 through its external perimetral edge 9, while the internal edge 11 of its central hole 10 elastically contrasts against the tapered part 12 of core 5 and it can vertically move with a relative motion in relation to said central core, under the thrust of an overpressure forming within the container.

It can particularly be observed, again in Fig. 1, that the edge of the central hole 10 of disk 6 presents a straight outline, whose edge 11 adheres to the corresponding tapered surface 12 of the central core 5 of valve-body 2.

While in operation, if the pressure in the interior 13 of container 4 is lower than the pressure of the external environment 14, disk 6 acquires the position represented in Fig. 1, that is the edge of its outline 11 adheres to the tapered surface 12 of the central core 5 of the valve-body 2, due to the atmospheric pressure, operating on the surface 19 of disk 6, which is higher than the pressure within the interior of container 13.

In these conditions the external environment 14 and the interior 13 of container do not communicate with each other.

Whenever, the pressure in the interior of container 4 is higher than the pressure of the external environment 14, this overpressure exits through the holes 15 on the bottom 16 of the valve-body 2 and pushes against the underside surface 17 of disk 6 causing the edge 11 of the central hole 10 to rise.

In this condition, as can be seen in Fig. 2, the edge of the central hole 10 of disk 6 and the tapered surface 12 of the central core 5 of the valve-body 2 are no longer in contact, so that the annular section 18 opens up and through this the fluid flows from the interior 13 of container 4 to the external environment 14.

The flow from the interior 13 of the container towards the exterior 14 goes on till a new condition of overpressure of the external environment 14 in relation to the internal environment 13 establishes itself. This re-establishes on the external surface 19 of disk 6, a force that brings again edge 11 in contact with the sealing tapered surface 12.

It is interesting to note that the overpressure in the interior 13 of container 4 can be caused by phenomena of decomposition of the material which is contained therein; in this case the substance exiting through the annular section 18 will be the gas produced by the decomposition of the product itself.

In other cases in the interior 13 of the container 4 there can be a fluid, possibly a thick fluid such as a shampoo or a liquid soap; in this case the internal overpressure can be a mechanic pressure that can caused , for instance, by the hand when squeezing the exterior of the elastic container 4.

In this case disk 6 will rise because of the internal overpressure exerted by the fluid contained in container 4 on the underside surface 17 of disk 6.

In this case there will be an outflow of the contained product through the annular section 18.

In this case too, the flow continues through the annular section 18 as long as the external mechanical pressure operating on the container 4 exists.

When this mechanical action stops the external pressure exerted on the surface 19 of disk 6, brings it back to the sealing position.

The sealing action can possibly be increased by creating a light depression in the interior 13 of container 4, which can be obtained by exerting a mechanical squeezing action on the container 4 in the orthogonal direction in relation to the previous direction.

It has been observed that the sealing surface between the elastic disk 6 and the valve-body 2 is realized by the edge of the central hole 10 of disk 6 which adheres because of an elastic pressure to the tapered surface 12 of the central core 5 of valve-body 2.

Since the surfaces in contact present quite a limited extension, it is easy to understand why the seal is insured even when, after a period of time, some aging phenomena may arise, which will cause a progressive increase of its stiffness.

Moreover, since the edge of the elastic disk 6 rests against the tapered surface 12, this contact favours the outlet of the fluid from the interior of the container to the exterior, while it prevents the entry of fluid from the environment 14 into the interior 13.

Another embodiment of the invention based on the same idea of solution is represented in Fig. 3, wherein it can be observed that elastic disk 6 creates the seal by contrast of the annular surface around the edge 11 against a surface 35, which is the upper flat surface of the cilindrical base 31 of the central core 33.

It can be understood that, when the internal overpressure causes the elastic disk 6 to rise, it is no longer supported by surface 35 and, therefore, the fluid comes out of the container.

It will be pointed out that both in the embodiment of the invention of Fig. 1 and in that of Fig. 3, the elastic membrane 6 has the groove 8 whose planar position is lower than the surface on which the edge 11 of its central hole 10 rests. Thus the membrane 6 is always elastically stressed, so that the edge 8 or the area surrounding this edge always presses on the surface against which it rests, thus insuring the seal.

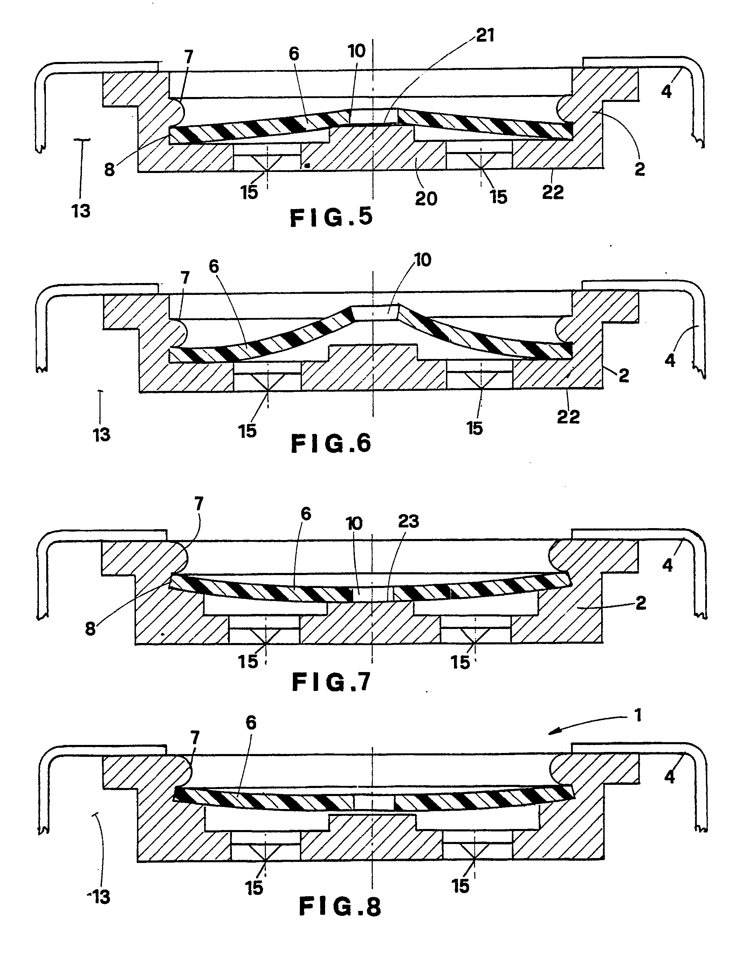

Another embodiment of the invention is represented in the Figs. 5 and 6.

In Fig. 5 the elastic disk 6, always anchored within groove 8, presents the edge of its central hole 10 resting on a surface 21 which is part of the central core 20 belonging to the bottom of cap 2.

In this case, too, has been observed, in the embodiment of Fig. 1 and Fig. 3, the surface 21 of the central core 20 is at a higher level than the groove 8, so as to insure also the elastic tension of disk 6 resting on the surface 21.

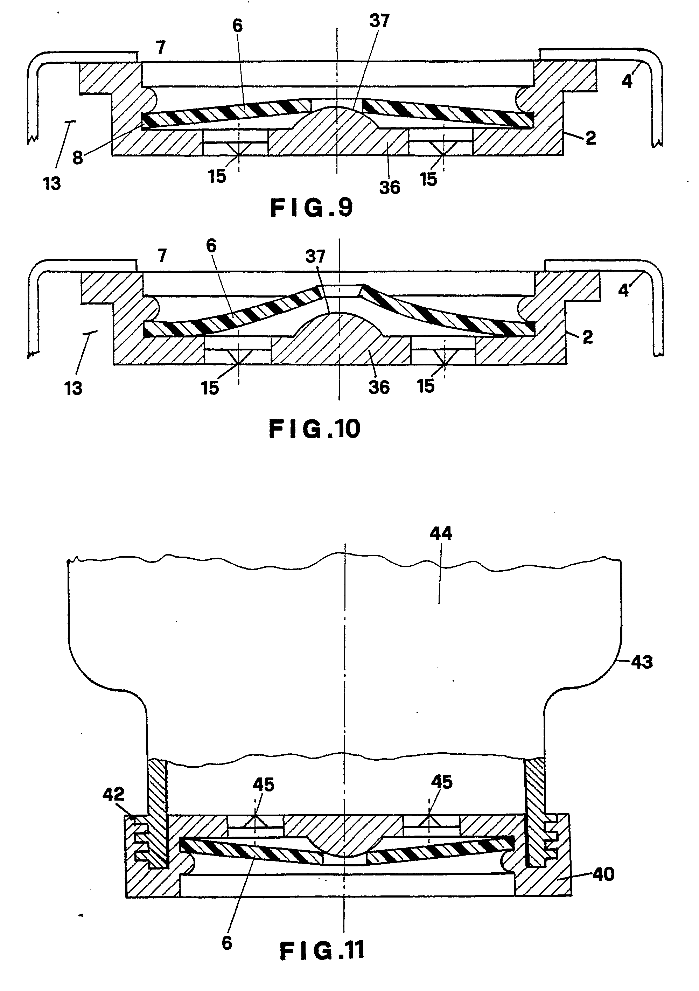

When the overpressure of the interior 13 of container 4 exceeds the external atmospheric pressure, disk 6 rises, as can be observed in Fig. 6, and causes the overpressure in the interior of the container to escape through the holes or the slits 15 belonging to the bottom of cap 2. It can be observed that in all the embodiments of the invention the slits 15 can be varied in number and arrangement although it is better to distribute them symmetrically on the lower bottom 22 of the cap 2. Fig. 7 and Fig. 8 show another embodiment of the valve of the invention wherein the central surface of the valve-body is a plane surface, as is shown in Fig. 5, but in the case of the Figs. 7 and 8, the central area of the valve-body presents a supporting plane 23 at a lower level in relation to the groove 8 holding the external perimeter 9 of disk 6. In this case the bottom of the valve-body 2, on which disk 6 rests, is shaped so that disk 6 is made to bend downwards, so that it insures the seal on surface 23 of the whole area around the central hole 10.

Fig. 8 shows valve 1 with the disk 6 pushed upwards because of the overpressure within the interior 13.

Fig. 9 and Fig. 10 show another embodiment of the unidirectional valve in which in the central area 36 of the valve-body there is a partially spheric cap 37 on which the edge of hole 10 of disk 6 rests. Groove 8 holding the perimeter of disk 6 is lower than base surface of cap 37 so that, even when resting, the disk is elastically deformed and, therefore, under tension.

When the overpressure in the interior of the container 4 exceeds the atmospheric external pressure, disk 6 rises and the gas escapes through the hole 10, can be observed in Fig. 10.

A further embodiment of the valve of the invention is represented in Fig. 11, where it can be observed that valve 1, instead of presenting a flanged edge, is applied directly to neck 41 of a container 43 by means of thread 42 obtained on valve-body 40.

This embodiment concerns the case in which the unidirectional valve of the invention is applied to a container holding shampoo, for instance, or a liquid soap.

In this case, when operating with the hand and pressing on the exterior of the container 6, an overpressure in relation to the external environment is created in the interior 44 , so that disk 46 rises and the fluid contained in the interior of the container 43, flows towards the exterior through the holes 45 which are on the bottom of valve-body 40.

When the action of the external pressure stops, the elastic disk 6 resumes its sealing position, thereby stopping the flow.

In order to guarantee the seal in the closed position it will be sufficient to dimension the area of the surfaces of the elastic disk 6, so that the atmospheric pressure operating on the external surface increased by the stiffness of the material, exceeds the weight of the fluid held in container 43, which when flowing through the holes 45, acts on the internal surface 48 of disk 46.

On the basis of what has been described, it can be understood that the valve of the invention, whatever its embodiment based on the same idea of solution, fulfils the proposed purpose.

Moreover, during the manufacturing stage, changes and variations may be applied the valve of the invention, such as the modification of the diameter of valve-body 2, or of the thickness of the elastic disk. Said changes and variations will, however, not exceed the scope of the invention, such as it is protected in the following claims.

## Claims

1) A unidirectional valve for fluids, comprising:
- a body (2;42) essentially having the shape of a cylindrical cap, preferably made of plastic material and presenting a plurality of holes or slits (15;45) on the bottom (2) and suited to put into communication the interior (13) of a container with the external environment
- a thin elastic and flexible disk (6) made of rubber or plastic material cooperating with the body (2,42) of the valve, and presenting at its center a circular hole (10), characterized in that the disk (6) is attached to the valve-body (2,42) through the insertion of its perimetral edge, into an annular groove (8),which is present on the internal lateral wall of the valve-body, and in that such a disk creates the seal with the body of the valve, by the elastic contrast of the edge (11) of its central hole, or of an area around this edge, against a corresponding edge or surface (12;35;21,23,37) belonging to the central area of the body of the valve.

2) A unidirectional valve according to claim 1, characterized in that the annular groove (8) of the body of the valve is created by an annular projection (7) which is present on the internal lateral surface of the valve-body.

3) A unidirectional valve according to claim 2, characterized in that the projection (7) which creates the annular groove on the internal lateral surface, has a semicircular cross-section.

4) A unidirectional valve according to claim 1, characterized in that the central area of the body of the valve presents a cylindrical core (5) attached to the base by tapered area (12), against which the edge (11) of the hole of the disk elastically contrasts thus creating the seal.

5) A unidirectional valve according to claim 1, characterized by the fact that the central area of the body of the valve presents a cylindrical core (33) with a flat surface (35), against which the edge (11) of the hole of the disk and the annular area adjoining it, elastically contrasts thus creating the seal.

6) A unidirectional valve according to claim 1, characterized in that the central area of the body of the valve presents a central core (36) in the shape of a cap (37) against the surface of which the edge of the hole of the disk (6) elastically contrasts thus creating the seal.

7) A unidirectional valve according to claim 1, characterized in that the cental area of the valve-body presents a flat surface (21; 23) at a level which is higher or lower than the annular groove (8) lodging the disk of the valve, so that the edge (11) of the hole of disk elastically contrasts against the flat surface thus creating the seal.

8) A unidirectional valve according to one of the preceding claims, characterized in that it presents a thread (42) on the lateral edge of the valve-body, suited to the connection with the neck of a container, which is also threaded.

FIG.1

FIG.2

FIG.3

FIG.4

FIG.5

FIG.6

FIG.7

FIG.8

FIG.9

FIG.10

FIG.11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 080 981 (STEWART) <br> * Column 2, line 50 - column 3, line 58; figure 1 * | 1,4 | B 65 D 77/22 <br> B 65 D 47/24 <br> F 16 K 15/14 |
| X | DE-C-1 000 199 (PHILIPS) <br> * Column 1, line 45 - column 2, line 49; figure 3 * | 1,2,5,7 | |
| Y | | 3 | |
| X | RESEARCH DISCLOSURE, no. 255, July 1985, page 362, no. 25543, Emsworth, Hampshire, GB; "Non-return valves" | 1,6 | |
| X | FR-A-2 502 483 (MINNETONKA) <br> * Page 7, lines 4-16; figures 2,5 * | 1,8 | |
| Y | FR-A-2 123 306 (NILSSON) <br> * Page 1, line 33 - page 2, line 1; figures 1-2 * | 3 | |

TECHNICAL FIELDS SEARCHED (Int. Cl.5)

B 65 D
F 16 K

The present search report has been drawn up for all claims

| Place of search | Date of completion of the search | Examiner |
|---|---|---|
| THE HAGUE | 28-05-1990 | BRIDAULT A.A.Y. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)